(19) Europäisches Patentamt
European Patent Office
Office européen des brevets

(11) **EP 3 209 829 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **15790857.5**

(22) Anmeldetag: **19.10.2015**

(51) Internationale Patentklassifikation (IPC):
**D21C 3/00** (2006.01) **D21C 11/00** (2006.01)
**D21C 3/20** (2006.01) **D21C 3/22** (2006.01)
**C07G 1/00** (2011.01)

(52) Gemeinsame Patentklassifikation (CPC):
**D21C 11/0007; C07G 1/00; D21C 3/00; D21C 3/20; D21C 3/22; D21C 11/00**

(86) Internationale Anmeldenummer:
**PCT/EP2015/074187**

(87) Internationale Veröffentlichungsnummer:
**WO 2016/062676 (28.04.2016 Gazette 2016/17)**

(54) **VERFAHREN ZUR FÄLLUNG VON LIGNIN AUS ORGANOSOLV-KOCHLAUGEN**

METHOD FOR PRECIPITATING LIGNIN FROM ORGANOSOLV PULPING LIQUORS

PROCÉDÉ DE PRÉCIPITATION DE LA LIGNINE À PARTIR DE LIQUEURS DE CUISSON D'ORGANOSOLVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2014 DE 102014221238**

(43) Veröffentlichungstag der Anmeldung:
**30.08.2017 Patentblatt 2017/35**

(73) Patentinhaber:
• **Max-Planck-Gesellschaft zur Förderung der Wissenschaften e.V.**
**80539 München (DE)**
• **Fraunhofer-Gesellschaft zur Förderung der angewandten Forschung e.V.**
**80686 München (DE)**

(72) Erfinder:
• **LESCHINSKY, Moritz**
**04229 Leipzig (DE)**
• **UNKELBACH, Gerd**
**04179 Leipzig (DE)**
• **SCHULZE, Peter**
**39249 Pömmelte (DE)**
• **LORENZ, Heike**
**39116 Magdeburg (DE)**
• **SEIDEL MORGENSTERN, Andreas**
**39114 Magdeburg (DE)**

(74) Vertreter: **Pfenning, Meinig & Partner mbB Patent- und Rechtsanwälte Theresienhöhe 11a 80339 München (DE)**

(56) Entgegenhaltungen:
EP-A1- 2 336 194     EP-A2- 0 140 226
CA-A1- 2 597 135     DE-A1-102013 002 574

**Beschreibung**

Die vorliegende Erfindung betrifft ein Verfahren von Fällung von Lignin aus Organosolv-Kochlaugen. Hierbei wird die Organosolv-Kochlauge in eine bereits bestehende wässrige Dispersion von Ligninpartikeln oder ein Filtrat einer wässrigen Dispersion von Ligninpartikeln als Fällungsmedium eingeleitet, wobei eine separate, Lignin-enthaltende Phase in dispergiertem Zustand entsteht.

Die Nutzung von erneuerbaren Rohstoffen ist für die Industrie angesichts der Endlichkeit der fossilen Ressourcen zunehmend von Interesse. Lignocellulose-Bioraffinerien könnten zukünftig durch Aufschluss verholzter Biomasse eine Reihe von Produkten liefern. Lignin gehört neben Cellulose und Hemicellulose zu den Hauptbestandteilen von verholzter Biomasse und kann beispielsweise als Aromaten-Quelle oder in Werkstoffen genutzt werden. Natives Lignin, wie es in Lignocellulose vorliegt, kann als dreidimensional verzweigtes Biopolymer beschrieben werden, das je nach Pflanze zu unterschiedlichen Anteilen aus den drei Monomeren, Cumaryl-, Coniferyl- und Sinapylalkohol, zusammengesetzt ist. Der Biomasse-Aufschluss ist erforderlich, um die Bestandteile der Lignocellulose voneinander zu trennen und kann u.a. durch den Organosolv-Aufschluss erfolgen. Beim Aufschluss wird die ursprüngliche Ligninstruktur teilweise abgebaut und je nach Aufschlussbedingungen in unterschiedlich große Fragmente zerteilt, die in der Aufschlusslösung löslich sind.

Bei dem Organosolv-Aufschluss wird Lignocellulose in Alkoholen wie Ethanol, Methanol oder längerkettigen Alkoholen, organischen Säuren wie Essigsäure oder Ameisensäure, Ketonen sowie Mischungen dieser Lösungsmittel und Mischungen mit Wasser bei Temperaturen um 150-200°C aufgeschlossen. Der Einsatz von Katalysatoren, wie beispielsweise Schwefelsäure, Schwefeldioxid, Natriumhydroxid oder Chlorwasserstoff, ist ebenfalls möglich. Lignin und Hemicellulose werden dabei solvolysiert und liegen nach dem Aufschluss gelöst im Lösungsmittelgemisch, der Kochlauge, vor. Die Cellulose wird als Faserfraktion abgetrennt. Das Lignin kann durch Verringerung des organischen Lösungsmittelgehaltes in der Kochlauge gefällt werden, da es in Wasser praktisch unlöslich ist. Das kann beispielsweise durch Verdünnung der Kochlauge mit Wasser oder durch Abdampfen des organischen Lösungsmittels erfolgen. Bei der Verdünnungsfällung durch einfache Verdünnung der Kochlauge mit Wasser entstehen meist keine Verkrustungen im Apparat und das Lignin bildet einen sehr feinen Niederschlag, der sich oft schlecht filtrieren, trocknen und als Schüttgut handhaben lässt. Für einen wirtschaftlichen Betrieb muss das organische Lösungsmittel rezykliert werden, weshalb es beispielsweise durch Destillation abgetrennt werden muss. Bei der Lignin-Fällung durch Verdünnung wird der Massenstrom der Kochlauge beispielsweise verdreifacht und es muss nach der Filtration relativ viel Energie zur Abtrennung des Lösungsmittels aufgewandt werden. Bei der Verdampfungsfällung, bei der das Lösungsmittel direkt aus der Kochlauge abgedampft wird, entstehen gewöhnlich starke Verkrustungen durch verflüssigtes Lignin. Die Rezyklierung des Lösungsmittels ist quasi in der Verdampfungsfällung enthalten, weshalb die Verdampfungsfällung der Verdünnungsfällung aus ökonomischen Gesichtspunkten vorzuziehen ist.

Die US 3,585,104 beschreibt eine Anlage, in der die heiße Kochlauge durch mehrstufige Gegenstrom-Entspannungsverdampfung in eine quasigeschmolzene Ligninphase, eine wässrige Phase mit gelösten Hemicellulosen und eine lösungsmittelreiche Dampfphase aufgetrennt wird. Die schwere weiche Ligninphase kann durch einfache Phasentrennung als viskose Flüssigkeit aus dem Prozess erhalten werden. Die weiche Ligninphase enthält noch Lösemittelreste, die beispielsweise durch Dampfstrippen entfernt werden müssen.

Das Abdampfen des Lösungsmittels aus der weichen Ligninphase ist gemäß diesem Patent jedoch praktisch unmöglich. Das weiche Lignin würde sich zudem beim Abdampfen des Lösungsmittels verfestigen, wenn es nicht über seine Fließtemperatur hinaus erhitzt wird. Die Handhabung des erweichten Lignins ist verfahrenstechnische aufwändig und das zusätzliche Dampfstrippen energieaufwändig.

Die US 4,100,016 beschreibt eine Anlage, in der die heiße Kochlauge einer Entspannungsverdampfung unterzogen wird. Dabei verdampft ein Teil des organischen Lösungsmittels und das Lignin fällt aus. Die erhaltene Dispersion soll bei Unterdruck eine Temperatur von ca. 80°C aufweisen. Die Dispersion gelangt anschließend in eine dampfbeheizte Stripping-Kolonne, die bei geringerem Druck arbeitet, um die Temperatur der Dispersion zu verringern und Verkrustung der Kolonne mit Lignin zu vermeiden. In der Stripping-Kolonne wird das organische Lösungsmittel komplett abgedampft. Die Lignin-Dispersion verlässt die Kolonne am Fuß und wird mittels Absatzbehälter und Zentrifuge zu einer Lignin-Dispersion mit 30 bis 40% Ligningehalt eingedickt.

Das "Flashen" der Kochlauge würde, Laborversuchen nach zu urteilen, zu starken Verkrustungen der Anlage führen, was Redundanzen der Anlage und aufwendige Apparatereinigung erfordert. Beim Abdampfen des restlichen Lösungsmittels in einer Destillationskolonne bei Unterdruck würde es, Laborversuchen nach zu urteilen, zur Bildung einer schwer kontrollierbaren Blasensäule kommen.

Die US 8,528,463 B2 beschreibt eine Anlage zur Organosolv-Fraktionierung von Lignocellulose. Das Lignin wird in vier Fraktionen mit unterschiedlichem Molekülgewicht gewonnen. Die erste Lignin-Fraktion fällt nach der enzymatischen Hydrolyse und der anschließenden Fermentation zu Ethanol als Hydrolyserückstand an. Die anderen drei Fraktionen sind in der Kochlauge enthalten. Die heiße Kochlauge gelangt in einen ersten Behälter, in dem Lignin mit hohem Molekülgewicht (HMW Lignin) ausfällt. Das HMW Lignin wird mit einer geeigneten Technik separiert und die flüssige Phase gelangt in einen zweiten Behälter, in dem mit Wasser verdünnt wird. Das Wasser stammt aus dem Sumpf einer Destillationskolonne zur Lösemittelrückgewinnung. Die entstandene Lignin-Dispersion wird filtriert und das Filtrat gelangt in die zuvor genannte Destillationskolonne, in der das Lösungsmittel abgedampft wird. Das Lignin gelangt zu einem Trockner. Eine weitere Lignin-Fraktion fällt aus dem Sumpfprodukt der Destillationskolonne aus, nachdem Essigsäure abgedampft wurde. Die Verdünnungsfällung mit kühlem Wasser gemäß diesem Prozess führt, eigenen Versuchen zufolge, zu schlecht filtrierbarem Lignin mit sehr kleinen Partikeln, die schwer zu trocknen sind. Die Aufteilung des Lignins in verschiedene Fraktionen erfordert größeren Filtrationsaufwand und resultiert somit in größeren Kosten. Zudem bestehen die bereits genannten ökonomischen Nachteile der Verdünnungsfällung, da der Massenstrom der Kochlauge vervielfacht wird und nach der Filtration des Lignins relativ viel Energie zur Ab-, trennung des Lösungsmittels aus dem Filtrat aufgewandt werden muss.

Die EP 2 336 194 A1 betrifft ein Verfahren zur Behandlung von Lignocellulosehaltigem Biomassematerial, umfassend (a) Inkontaktbringen des lignocellulosehaltigen Biomassematerials mit einem Lösungsmittel, umfassend Wasser und Ameisensäure, bei einer Temperatur im Bereich von 100°C bis 200°C und bei einen Druck von nicht mehr als 10 bar (a) um einen ersten Flüssigkeitsstrom, der hydrolysierte Hemicellulose umfasst, und einen zweiten Strom, der Lignin und Cellulose umfasst, zu erhalten;(b) Abtrennen des ersten Flüssigkeitsstroms von dem zweiten Strom;(c) Waschen des zweiten erhaltenen Stroms in Schritt (a) mit einem Wasser und einem in Wasser löslichen Lösungsmittel, um einen flüssigen Strom zu erhalten, der Lignin und einen festen Rückstand umfasst, der Cellulose umfasst;(d) Unterziehen des in Schritt (c) erhaltenen flüssigen Stroms mindestens einer Verdampfung und Destillation, um eine Aufschlämmung zu erhalten, die gefälltes Lignin umfasst; und(e) Unterziehen der in Schritt (d) erhaltenen Aufschlämmung einer Sedimentati-on, gefolgt von einer Filtration und Zentrifugation, um Lignin und einen verbrauchten wässrigen Strom zu erhalten.

Für die Gewinnung von Lignin durch Ausfällung aus alkalischen Lignin-Lösungen mittels Neutralisation und zur Rückgewinnung des Alkali wird eine elektrolytische Ansäuerung der Lignin-Lösungen bei gleichzeitiger Regenerie-rung des verwendenten Alkali vorgeschlagen. Hierfür beschreibt die EP 0 140 226 A2 ein Verfahren, das besonders günstig für die Herstellung von reinem Lignin (z. B. aus dem Organosolvaufschluß) einsetzbar ist.

Die CA 2 597 135 A1 beschreibt ein modulares Verfahren zur Organosolv-Fraktionierung von Lignocellulose-Einsatzmaterialien in Bestandteile und Wei-terverarbeitung der Bestandteile zu mindestens kraftstofftauglichem Ethanol und vier Klassen von Lignin-Derivaten. Das modulare Verfahren umfasst ein erstes Verarbeitungsmodul, das zum physikalisch-chemischen Aufschluss von Lignocellulose-Einsatzmaterialien mit einem organischen Lösungsmittel konfiguriert ist, wodurch eine Cellulose-Feststofffraktion und eine flüssige Fraktion erzeugt werden, ein zweites Verarbeitungsmodul, das zum Herstellen von mindestens einem Ethanol von Brennstoffqualität und einer ersten Klasse von neuartige Ligninderivate aus der Cellulose-Feststofffraktion, ein drittes Verarbeitungsmodul konfiguriert zum Abtrennen einer zweiten Klasse und einer dritten Klasse von Ligninderivaten aus der flüssigen Fraktion und Weiterverarbeitung der flüssigen Fraktion zu einem Destillat und einer Schlempe, ein viertes Verarbeitungsmodul konfiguriert für Abtrennen einer vierten Klasse von Ligninderivaten aus der Schlempe und Weiterverarbeitung der Schlempe, um einen Zuckersirup herzustellen.

Aus der DE 10 2013 002 574 A1 ist ein mikrostrukturierter Verbundwerkstoff, umfassend eine Matrix, enthaltend mindestens eine Art von thermoplastischem Kunststoff und mindestens eine Ligninart und/oder mindestens ein Ligninderivat homogen verteilt in der Matrix, bekannt, der sich dadurch auszeichnet, dass die mindestens eine Art von Lignin und/oder mindestens ein Lignin-Derivat in Partikelform vorliegt und die Querschnittsfläche der Partikel rund, weitestgehend rund, kreisförmig, weitestgehend kreisförmig, elliptisch oder weitestgehend elliptisch ist.

Wie voranstehend gezeigt, ist somit sowohl das Strippen von organischen Lösungsmitteln aus Organosolv-Kochlauge wie auch das Ausfällen von Lignin aus Organosolv-Kochlauge mittels Wasser problematisch, da einerseits nur schlecht zu verarbeitende Lignin-Partikel erhalten werden bzw. das Verfahren andererseits unökonomisch wird.

Aufgabe der vorliegenden Erfindung ist es somit, ein neuartiges Verfahren anzugeben, das die zuvor genannten Probleme adressiert. Das neuartige Verfahren soll sich zum Einen dadurch auszeichnen, dass die damit erzeugten Lignin-Partikel äußerst hohe Güte aufweisen, andererseits, dass das Verfahren äußerst ökonomisch geführt werden kann.

Diese Aufgabe wird mit den Merkmalen des Patentanspruchs 1 gelöst. Die jeweilig abhängigen Patentansprüche stellen dabei vorteilhafte Weiterbildungen dar.

Die vorliegende Erfindung betrifft somit ein Verfahren zur Fällung von Lignin aus einer Organosolv-Kochlauge, enthaltend eine Mischung aus Wasser und mindestens einem organischen Lösungsmittel sowie in der Mischung gelöstem Lignin, bei dem die Organosolv-Kochlauge in eine wässrige Dispersion von Ligninpartikeln oder in ein Filtrat einer wässrigen Dispersion von Ligninpartikeln, eingeleitet wird, wobei aus der durch das Einleiten der Organosolv-Kochlauge in die wässrige Dispersion entstehenden Mischung das mindestens eine organische Lösungsmittel zumindest partiell entfernt wird, so dass der Gehalt des mindestens einen organischen Lösungsmittels in der Mischung geringer gehalten wird als in der Organosolv Kochlauge, wobei aus dem gelösten Lignin eine separate Lignin-enthaltende Phase ausgebildet wird, die in der Mischung dispergiert vorliegt.

Der Begriff Lignin wird erfindungsgemäß dabei so verstanden, dass davon unmodifiziertes Lignin, als auch fällbare Lgininderivate umfasst sind.

Die Organosolv-Kochlaugen, die gemäß der vorliegenden Erfindung verwendet werden können, können dabei aus beliebigen Rohstoffen erzeugt werden. Maßgeblich ist lediglich, dass die Organosolv-Kochlaugen Lignin enthalten und somit aus einer Lignin-enthaltenden Quelle stammen. Lediglich beispielshafte Quellen, aus denen die Organosolv-Kochlaugen erzeugt werden können, sind Laubhölzer, Nadelhölzer, aber auch Stroh und Gräser. Die vorliegende Erfindung ist selbstverständlich nicht auf die zuvor genannten Lignin-Quellen beschränkt.

Die Organosolv-Kochlauge kann dabei neben den oben genannten Mindestbestandteilen noch weitere Bestandteile, wie z.B. Zucker, Proteine oder gängige beim Organosolv-Aufschluss anfallende Bestandteile beinhalten.

Im Gegensatz zu den eingangs vorgestellten Verfahren zur Herstellung von gefälltem Lignin beruht die vorliegende Erfindung darauf, anstelle von Wasser als Fällungsmittel bereits eine wässrige Dispersion von Ligninpartikeln bzw. ein Filtrat einer wässrigen Dispersion von Ligninpartikeln einzusetzen und simultan das Lösungsmittel mindestens anteilig aus der Dispersion zu entfernen. Die wässrige Dispersion von Ligninpartikeln, die beim erfindungsgemäßen Verfahren eingesetzt wird, kann beispielsweise initiell dadurch hergestellt werden, dass eine auch beim erfindungsgemäßen Verfahren einzusetzende Organosolv-Kochlauge mit Wasser verdünnt wird, bis erstmalig Lignin-Partikel ausfallen. Ein entsprechendes Filtrat einer derartig hergestellten gefällten Organosolv-Kochlauge kann ebenso als Fällungsmedium beim erfindungsgemäßen Verfahren verwendet werden.

Mit der erfindungsgemäßen Verfahrensweise kann überraschenderweise festgestellt werden, dass einerseits Ligninpartikel von hoher Güte, insbesondere mit einem genau definierten und im Wesentlichen homogener Partikeldurchmesserverteilung hergestellt werden können, andererseits kann mit der erfindungsgemäßen Verfahrensweise eine äußerst ökonomische Verfahrensweise sichergestellt werden, da vermieden wird, unnötig viel Wasser bei der Ausfällung der Ligninpartikel zu verwenden, das nachfolgend in aufwendiger Weise wieder abgetrennt werden müsste.

Die Vorteile des erfindungsgemäß gegenüber den bisherigen Verfahren zur Ligninfällung sind insbesondere:

- Vorgabe eines Prozessfensters mit Temperatur und Lösungsmittelgehalt der Dispersion
- Vermeidung von Verkrustungen im Fällungsreaktor
- Verbesserung der Filtrierbarkeit durch Vergrößerung der Partikel
- Kontrollierte Fällung und Lösungsmittelrückgewinnung in einem Apparat möglich
- Keine oder wesentlich weniger zusätzlichen Medien zur Verdünnung notwendig, dadurch deutliche Energieeinsparung bei der Anschließenden Lösungsmittelrückgewinnung

Zusätzlich wird das organische Lösungsmittel, das in der Organosolv-Kochlauge enthalten ist, zumindest partiell aus der beim Fällungsprozess entstehenden Mischung abgetrennt, so dass die Konzentration bzw. der Gehalt des organischen Lösungsmittels in der wässrigen Dispersion bzw. im Filtrat dieser Dispersion geringer gehalten wird als in der Organosolv-Kochlauge.

Eine bevorzugte Ausführungsform sieht vor, dass der Gehalt des mindestens einen organischen Lösungsmittels in der Mischung auf einen vorbestimmten Schwellenwert eingestellt wird, und das Einleiten der Organosolv-Kochlauge und/oder das zumindest partielle Entfernen des mindestens einen organischen Lösungsmittels so gesteuert wird, dass der Schwellenwert maximal um 10 %, bevorzugt maximal 5 %, besonders bevorzugt maximal 2 % über- oder unterschritten wird.

Mit einer derartigen Maßnahme wird der optimale Gehalt des organischen Lösungsmittels in der Mischung beibehalten, so dass eine ausgezeichnete und vollständige Ausbildung der separaten Lignin-enthaltenden Phase gewährleistet ist. Durch eine Steuerung eines Einleitens der Organosolv-Kochlauge oder der Steuerung des partiellen Entfernens des mindestens einen organischen Lösungsmittels aus dieser Mischung, bevorzugt durch Kombination der Steuerung der beiden Maßnahmen kann der Schwellenwert möglichst konstant gehalten werden.

Insbesondere wird der Schwellenwert des Gehaltes des mindestens einen organischen Lösungsmittels auf 0,01 bis 40 Gew.-%, bevorzugt 1 bis 15 Gew.-%, besonders bevorzugt 5 bis 10 Gew.-% eingestellt.

Gemäß einer weiter bevorzugten Ausführungsform erfolgt das zumindest partielle Entfernen des mindestens einen organischen Lösungsmittels mittels Destillation, bevorzugt mittels Destillation unter gegenüber Normalbedingungen reduziertem Druck, insbesondere bei Drücken zwischen 0,1 und 1000 mbar, besonders bevorzugt zwischen 100 und 500 mbar, und/oder durch Membranfiltration.

Die separate dispergierte Lignin-enthaltende Phase enthält bevorzugt feste Ligninpartikel und/oder flüssige Lignintröpfchen. Gemäß einer besonders bevorzugten Ausführungsform besteht die dispergierte Lignin-enthaltende Phase aus festen Ligninpartikeln bzw. flüssigen Lignintröpfchen.

Das Einleiten der Organosolv-Kochlauge in die wässrige Dispersion oder das Filtrat der wässrigen Dispersion und/oder das zumindest partielle Entfernen des mindestens einen organischen Lösungsmittels erfolgt bevorzugt fedbatchweise, d.h. quasi kontinuierlich oder kontinuierlich.

Beim Einleiten der Organosolv-Kochlauge in die ursprünglich vorliegende wässrige Dispersion von Ligninpartikeln bzw. in das Filtrat der wässrigen Dispersion wird die Organosolv-Kochlauge vorzugsweise auf eine Temperatur von 20 bis 200 °C, bevorzugt 50 bis 150 °C, besonders bevorzugt von 60 bis 100 °C eingestellt. Das Gleiche gilt ebenso für das weitere Einleiten der Organosolv-Kochlauge in die einmal entstandene Mischung, die beim ersten Einleiten der Orgnosolv-Kochlauge in die wässrige Dispersion bzw. in das Filtrat der wässrigen Dispersion entsteht.

Die wässrige Dispersion bzw. das Filtrat der wässrigen Dispersion wird beim erstmaligen Einleiten der Organosolv-Kochlauge bevorzugt auf eine Temperatur von 20 bis 100 °C, bevorzugt 40 bis 90 °C eingestellt. Dieselben Temperaturbereiche werden vorzugsweise ebenso für die Mischung gewählt, die aus dem Einleiten der Organosolv-Kochlauge in die ursprünglich verwendete wässrige Dispersion bzw. deren Filtrat verwendet wird.

Gemäß einer weiteren bevorzugten Ausführungsform beträgt der Gehalt des mindestens einen Lösungsmittels in der Organosolv-Kochlauge von 10 bis 90 Gew.-%, bevorzugt 30 bis 70 Gew.-%, besonders bevorzugt 40 bis 60 Gew.-%.

Ebenso ist es vorteilhaft, wenn der Gehalt des mindestens einen organischen Lösungsmittels in der durch das Einleiten der Organosolv-Kochlauge in die wässrige Dispersion oder in das Filtrat der wässrigen Dispersion entstehenden Mischung nach Abschluss der Fällung weiter reduziert wird, vorzugsweise durch Destillation des mindestens einen organischen Lösungsmittels und/oder mittels Membranfiltration.

Durch eine derartige Maßnahme kann der Lösungsmittelgehalt in der Mischung weiter reduziert werden und das Lösungsmittel rückgewonnen werden. Hierdurch werden weitere ökonomische Vorteile der erfindungsgemäßen Verfahrensführung sichergestellt. Aufgrund der bereits abgeschlossenen Fällung findet dabei jedoch keine Qualitätseinbuße bei der bereits ausgefällten separaten Lignin-enthaltenen Phase statt.

Eine besonders bevorzugte Ausführungsform sieht vor, dass nach Abschluss der Fällung und/oder während der Fällung der Median der zahlengemittelten Partikelgrößenverteilung der dispergierten Lignin enthaltenden Phase durch mechanische Agitation und/oder Erwärmen der Mischung über den Erweichungspunkt des Lignins vergrößert wird.

Für den Fall, dass die Ligninpartikel bereits in fester Form vorliegen, kann eine Erhöhung der Temperatur der Mischung dazu führen, dass die Ligninpartikel über den Erweichungspunkt des Lignins erwärmt werden und die festen Ligninpartikel in eine weiche Form bzw. in flüssige Ligninpartikel überführt werden. Durch vorzugsweise mechanische Agitation kann dabei eine Konsolidierung der (kleinen) Ligninpartikel zu (größeren) Ligninpartikeln vorgenommen werden.

Bevorzugt ist ebenso, wenn die dispergierte Lignin enthaltende Phase nach Abschluss der Fällung und/oder nach Veränderung der Partikelgrößenverteilung und/oder nach weiterer Reduktion des Gehalts an mindestens einem Lösungsmittel und/oder nach Abkühlen der Mischung unter die Erweichungstemperatur der dispergierten Ligninphase abgetrennt werden, bevorzugt mittels Fest-Flüssig-Trennverfahren, insbesondere durch Filtration, Sieben, und/oder Zentrifugation.

Das mindestens eine organische Lösungsmittel ist dabei bevorzugt ausgewählt aus der Gruppe bestehend aus Alkoholen, insbesondere Ethanol, Methanol, n-Propanol, i-Propanol, n-Butanol, i-Butanol, tert.-Butanol; organischen Säuren, insbesondere Ameisensäure, Essigsäure; Ketonen, insbesondere Aceton sowie Mischungen oder Kombinationen hiervon.

Hierbei ist Ethanol besonders bevorzugt.

Vorteilhafterweise wird das Verfahren in einem Behälter mit Agitationsmöglichkeit durchgeführt, der eine Zuleitung für Organosolv-Kochlauge, eine Möglichkeit zur Zufuhr der Verdampfungsenergie, einen Abzug für Dämpfe des mindestens einen organischen Lösungsmittels sowie mindestens einen dem Abzug nachgeschalteten Kondensator für das mindestens eine organische Lösungsmittel sowie ggf. einen Ablauf und bevorzugt einen Wärmetauscher im Ablauf und/oder eine Kolonne vor dem Dampf-Kondensator umfasst.

Ebenso werden Ligninpartikel beschrieben, die gemäß einem voranstehend vorgestellten Verfahren herstellbar sind.

Vorzugsweise zeichnen sich die Ligninpartikel durch einen zahlengemittelten Partikeldurchmesser von 1 bis 1000 $\mu$m, bevorzugt 10 bis 100 $\mu$m aus.

Der Partikeldurchmesser einzelner Partikel - bzw. der gewichtsgemittelte Partikeldurchmesser wird dabei Inline mittels Mikroskop-Bildanalyse und/oder Laserreflektionsmessung (Lasentec FBRM D600VL System von Mettler Toledo) bestimmt. Ebenso kann eine Bestimmung gemäß O. Monnier et al. in Part. Part. Syst. Charact. 13 (1996) 10-17 beschrieben, erfolgen.

Insbesondere weisen die Ligninpartikel annähernd oder vollständig kugelförmige Form auf. Hierbei sind die Ligninpartikel durch ein Achsenverhältnis gemäß folgender Formel definiert:

$$\frac{\sum_{i=1}^{n} a_i : b_i}{n}$$

wobei

a_i die kleinste Achsabmessung einer zweidimensionalen Projektion eines Ligninpartikels,

b_i die größte Achsabmessung einer zweidimensionalen Projektion eines Ligninpartikels und

n die Anzahl der Ligninpartikel einer Partikelprobe bezeichnen, wobei das Achsverhältnis > 0,5, bevorzugt > 0,8 beträgt.

Alternativ hierzu können die Ligninpartikel auch als Agglomerat von Primärpartikeln vorliegen, wobei die jeweiligen Primärpartikel auch die zuvor genannte Bedingung der Achsenverhältnisse aufweisen können.

Die vorliegende Erfindung wird anhand der nachfolgenden Ausführungen näher beleuchtet, ohne die Erfindung auf die dargestellten speziellen Parameter zu beschränken.

Die Erfindung beinhaltet ein verbessertes Verfahren zur Fällung von Lignin aus Organosolv-Kochlauge. Der Prozess kann semikontinuierlich oder vorzugsweise kontinuierlich durchgeführt werden. Dabei erfolgt die Fällung durch (semi-)kontinuierliche Dosierung von Organosolv-Kochlauge in eine Lignin-Dispersion mit einem Lösungsmittelgehalt und einer Temperatur gemäß der Erfindung. Diese Lignin-Dispersion kann beim Anfahren durch Mischung von Kochlauge mit Wasser oder im (semi-)kontinuierlichen Betrieb durch Rückhalt bereits produzierter Lignin-Dispersion vorgehalten werden. Beispiele für erfindungsgemäße Werte von Lösungsmittelgehalt und Temperatur sind den Ausführungsbeispielen zu entnehmen. Der Lösungsmittelgehalt in der Dispersion wird durch (semi-)kontinuierliche Verdampfung des (durch die Kochlauge) zugeführten Lösungsmittels konstant gehalten. Die Temperatur der Lignin-Dispersion wird durch den Druck über der Dispersion eingestellt und konstant gehalten. Die Beheizung der Dispersion kann indirekt über Wärmetauscher oder direkt durch Dampfeintrag u.a. erfolgen. Der entstehende Lösungsmittel-Wasser-Dampf kann direkt abgeführt und kondensiert oder zunächst rektifiziert und dann kondensiert werden. Die entstehende Lignin-Dispersion kann (semi-)kontinuierlich abgeführt und nach Abkühlung und/oder weiterer Reduzierung des Lösungsmittelgehaltes in einer zweiten Anlage, filtriert werden.

Die Fällung des Lignins, die Einstellung der Partikelgrößenverteilung und das Abdampfen des Lösungsmittels können simultan in einem Apparat ohne Bildung von Verkrustungen stattfinden, was eine Verbesserung gegenüber dem Stand der Technik darstellt. Die Einstellung der Partikelgrößenverteilung kann vor, während oder nach der Verdampfung des Lösungsmittels und bei Bedarf unabhängig vom Verdampfen des Lösungsmittels erfolgen.

Vor der Filtration muss die Dispersion bei ausreichend geringem Lösungsmittelgehalt nur noch gekühlt werden, um die Viskosität des Lignins zu erhöhen. Bei höherem Lösungsmittelgehalt muss in einem zweiten Apparat (beispielsweise baugleich dem ersten) durch Verringerung des Druckes und evtl. Wärmezufuhr weiter abgedampft werden, bevor die Dispersion zur Filtration gelangen kann.

Die vorliegende Erfindung wird anhand der nachfolgenden Figuren näher erläutert, ohne die Erfindung auf die speziellen Parameter in den Figuren zu beschränken.

Darin zeigen:

Figur 1 eine erste Vorrichtung zur Ausführung des erfindungsgemäßen Verfahrens,

Figur 2 eine zweite Vorrichtung zur Ausführung des erfindungsgemäßen Verfahrens,

Figur 3 eine dritte Vorrichtung zur Ausführung des erfindungsgemäßen Verfahrens,

Figur 4 eine vierte Vorrichtung zur Ausführung des erfindungsgemäßen Verfahrens,

Figur 5 eine mikroskopische Aufnahme von erfindungsgemäß hergestellten Ligninpartikeln, sowie

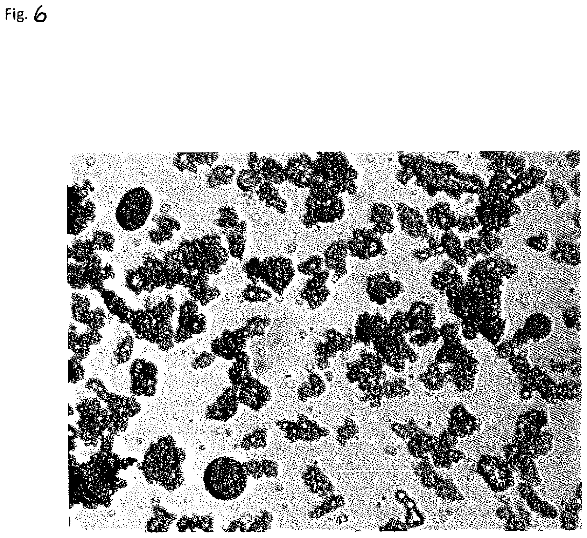

Figur 6 eine mikroskopische Aufnahme einer weiteren erfindungsgemäß hergestellten Lignin-Fraktion.

Figur 7 eine mikroskopische Aufnahme einer weiteren erfindungsgemäß hergestellten Lignin-Fraktion.

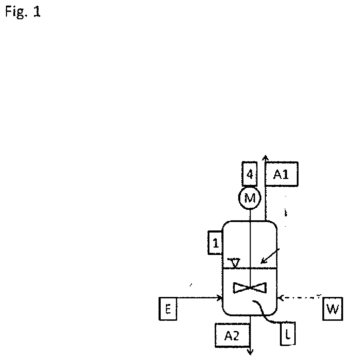

Figur 1 zeigt eine erste beispielhafte Apparatur zur Durchführung des erfindungsgemäßen Verfahrens. Dargestellt ist ein Rührkessel 1 mit einem mechanischen Rührwerk 4, in dem eine Dispersion von Ligninpartikeln bzw. ein Filtrat einer Dispersion von Ligninpartikeln L vorgelegt wird. Über einen Einlass E wird Organosolv-Kochlauge, insbesondere aus einem Lignocellulose-Aufschlussverfahren in den Rührkessel 1 eingeführt. Beim Eintritt der Organosolv-Kochlauge in den Rührkessel 1 findet ein Vermischen der Organosolv-Kochlauge mit der vorhandenen Dispersion von Ligninpartikeln bzw. dem Filtrat der Dispersion statt. Aufgrund der Tatsache, dass die Konzentration des organischen Lösungsmittels in dieser Dispersion bzw. dem Filtrat geringer ist als eine Organosolv-Kochlauge findet ein Ausfällen des gelösten Lignins aus der Organosolv-Kochlauge statt. Der Rührkessel 1 kann über eine direkte oder indirekte Wärmezufuhr W temperiert oder gekühlt werden.

Über einen Abzug A1 kann beispielsweise über ein angelegtes partielles Vakuum bzw. einen verminderten Druck eine Abdestillation des zumindest einen Lösungsmittels gewährleistet werden. Die beim Fällungsverfahren entstehende Mischung kann über einen zweiten Auslass A2 ausgetragen werden.

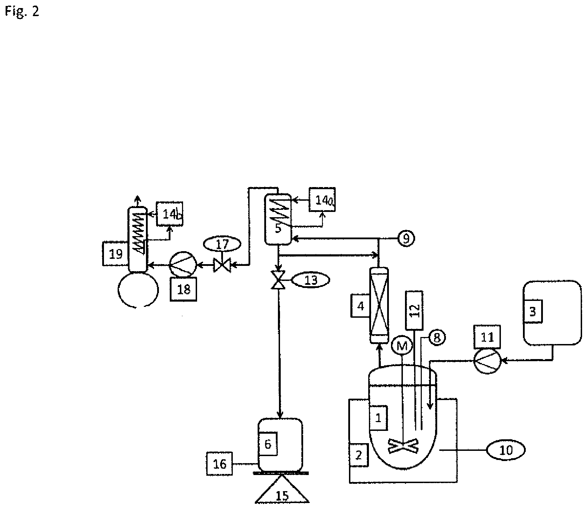

Figur 2 zeigt eine weitere beispielhafte Vorrichtung zur Ausführung des erfindungsgemäßen Verfahrens. Auch diese Vorrichtung beinhaltet einen Rührkessel 1 zur Ligninfällung mit einem mechanischen Rührwerk M. Der Rührkessel 1 umfasst zudem einen Mantel 2, über den der Rührkessel 1 beheizt bzw. gekühlt werden kann. Die Temperatur des Mantels kann dabei beispielsweise mittels eines Temperaturfühlers 10 überwacht werden. Die Organosolv-Kochlauge kann dabei beispielsweise in einem Vorlagebehälter 3 gelagert werden und über eine Pumpe 11 in den Rührkessel 1 eingetragen werden. Im Rührkessel wird dabei eine Dispersion von Ligninpartikeln bzw. ein entsprechendes Filtrat als Fällmedium vorgelegt. Der Temperaturverlauf des Gemisches wird mittels eines Temperaturfühlers 8 im Rührkessel überwacht. Die Partikelgrößenverteilung des Lignins in der Disperison kann über eine Sonde 12 verfolgt werden, insbesondere eine Sonde mit der eine inline-Laserreflektionsmessung durchführbar ist. Das Lösungsmittel, das in der Organosolv-Kochlauge enthalten ist, insbesondere Ethanol, wird dabei über einen Austrag am Rührkessel, der in einen Kondensator 5 mündet, abgezogen. Dem Kondensator 5 ist eine Rektifikationskolonne 4 vorgeschaltet. Die Temperatur des Gasstroms kann mittels eines Temperaturfühlers 9 überwacht werden. Der Kondensator 5 kann mit einem Kühlmedium 14a versorgt werden. Zur Abdestillation und Kondensation des Lösungsmittels über den beschriebenen Kondensator 5 kann beispielsweise ein Unterdruck auf den gesamten Rührkessel 1 wirken, der mit einer Vakuumpumpe 18 erzeugt wird. Der Unterdruck kann beispielsweise mit einem Regelventil 17 gesteuert werden. Zur Bestimmung der Menge des abgezogenen Lösungsmittels kann das Destillat beispielsweise gewogen werden, insbesondere über eine Waage 15 für das Destillat, mit der das Gewicht des sich im Destillationsbehälter 6 ansammelnden Destillats bestimmt wird. Der Zulauf zum Destillatbehälter 6 kann dabei mittels eines Ventils 13 geregelt werden. Über ein Dichtemessgerät oder ein Refraktometer 16 für das Destillat kann der Ethanolgehalt des Destillates und somit die Gesamtmenge des abgetrennten Ethanols bestimmt werden. Der Vakuumpumpe 18 kann eine Abtrenneinrichtung 19 für ggfs. noch enthaltenes Lösungsmittel, beispielsweise Ethanol, nachgeschaltet sein, insbesondere eine Kühlvorrichtung, bei der mittels eines Kühlmediums 14b Ethanol aus den ausgetragenen gasförmigen Strömen abgetrennt werden kann.

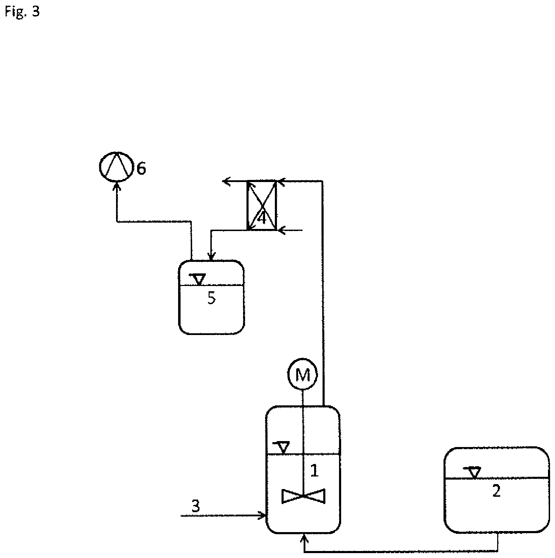

Figur 3 zeigt eine weitere Vorrichtung zur Durchführung des erfindungsgemäßen Verfahrens. Auch diese Vorrichtung beinhaltet einen Rührkessel 1 zur Ligninfällung, der beispielsweise auch eine Temperatur- und Druckmesseinrichtung aufweisen kann. Dem Rührkessel wird Organosolv-Kochlauge aus einem Vorlagebehälter 2 für Kochlauge zugeführt. Dieser Behälter kann mit einer Waage versehen sein, so dass die absolut zugeführte Menge von Organosolv-Kochlauge und deren Rate bestimmt werden kann. Über eine Eintragsmöglichkeit 3 kann Heizdampf (beispielsweise mit einem Druck von 230 mbar absolut und 63°C) in den Rührkessel 1 eingetragen werden. Der Druck im Rührkessel wurde in diesem Beispiel auf 100 mbar eingestellt. Jedoch können auch gasförmige Produkte, insbesondere das Lösungsmittel (beispielsweise Ethanol) aus der entstehenden Mischung im Rührkessel 1 ausgetragen werden und im Kondensator 4 kondensiert werden. Das Kondensat kann beispielsweise in einem Auffanggefäß 5, beispielsweise ein Destillatbehälter mit Temperatur- und Füllstandsmessung, aufgefangen werden. Die Abdestillation des Lösungsmittels kann über eine Vakuumpumpe 6 mit Druckregelung unterstützt werden.

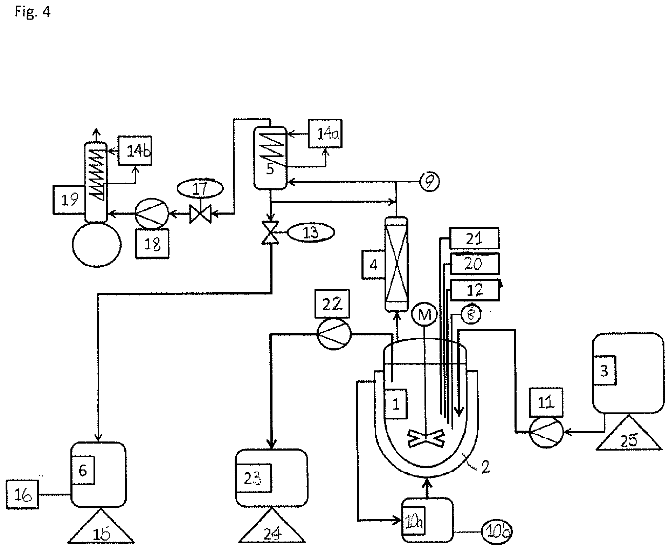

Figur 4 zeigt eine weitere Vorrichtung zur Durchführung des erfindungsgemäßen Verfahrens, die an den Aufbau der in Figur 2 vorgestellten Vorrichtung angelehnt ist. Identische Bezugszeichen bezeichnen dabei identische Bestandteile. Die Vorrichtung gemäß Figur 4 eignet sich insbesondere zur Durchführung eines kontinuierlichen Fällprozesses. Zusätzlich zu den in Figur 2 gezeigten Bestandteilen, umfasst die Vorrichtung gemäß Figur 4 im Rührkessel eine Sonde 21, mit der der Ethanolgehalt der Dispersion überwacht werden kann. Hierbei kann es sich beispielsweise um eine kalibrierte ATR-FT-MIR-Sonde (attenuated total reflection-FT-MIR) handeln. Ebenso umfasst ist eine Videomikroskop-Sonde 20, mit der Form und Größe der Ligninpartikel in der Dispersion beobachtet werden können. Zusätzlich umfasst die Vorrichtung eine Austragsmöglichkeit, mit der Lignin-Dispersion dem Rührkessel 1 entnommen werden kann. Hierzu ist eine Pumpe 22 vorgesehen, mit der Lignin-Dispersion in einen Dispersionsbehälter 23 gepumpt werden kann. Die ausgetragene Menge der Dispersion kann dabei mittels einer Waage 24 überwacht werden.

Ebenso umfasst ist eine Waage 25, mit der die eingetragene Organosolv-Kochlauge aus dem Vorratsbehälter 3 ermittelt und überwacht werden kann.

Die vorliegende Erfindung wird anhand der nachfolgenden Ausführungsbeispiele näher beschrieben, ohne die Erfindung hierauf zu beschränken.

Ausführungsbeispiel 1 (Labormaßstab):

Geräte und Chemikalien:

Die verwendete Organosolv-Kochlauge (aus Laubholz Buche) setzt sich durchschnittlich wie folgt zusammen: 47% w/w Ethanol, 47% w/w Wasser, 4% w/w Kohlenhydrate, 2% w/w Lignin.

Der Versuchsaufbau ist der Figur 2 zu entnehmen.

Im Rührkessel 1 wurden ca. 150 g Lignin-Dispersion mit ca. 10% w/w Ethanol durch Mischung von Wasser (80% w/w) und Kochlauge (20% w/w) vorgelegt. Der Druck wurde dabei auf 100 mbar im Rührkessel eingestellt. Die Lignin-Dispersion wurde über eine Heizung 2 auf Siedetemperatur der Dispersion von ca 42,5 °C eingestellt. Es erfolgte eine Destillation mit vollem Rücklauf bis die Dampftemperatur 9 konstant 29,5°C betrug. Bei Erreichen der konstanten Temperatur stellte sich ein thermodynamisches Gleichgewicht in der Rektifikationskolonne 4ein. Der Destillatfluss wurde mittels Rückflussventil 13 auf ca. 0,5 g Destillat/min eingestellt, so dass die Dampftemperatur konstant blieb, um eine konstante Ethanolkonzentration im Destillat zu erhalten. Danach wurde die Kochlauge mit ca. 1,2 g/min aus dem Vorlagenbehälter 3 zugeführt, hierbei blieb die Dispersionstemperatur im Rührkessel 1 konstant, womit eine konstante Ethanolkonzentration in der Lignin-Dispersion erhalten blieb. Nach Zudosierung von 283 g Kochlauge wurde die weitere Zugabe gestoppt, da der maximale Füllstand im Rührkessel erreicht wurde. Es erfolgte ein weiteres Abdampfen von Ethanol bzw. eines wässrigen Ethanolgemisches, bis die Dampftemperatur von Wasser (45°C) annähernd erreicht wurde und sich eine Ethanolkonzentration in der Lignin-Dispersion von kleiner 1 Gew.-% einstellte. Danach wurde der Druck auf Umgebungsdruck angehoben. Es erfolgte ein kurzes Erwärmen der Lignin-Dispersion im Rührkessel 1 auf ca. 75°C um den Median der Lignin-Partikelgrößenverteilung zu erhöhen und annähernd kugelförmige Lignin-Partikel zu erhalten. Abschließend erfolgte eine Abkühlung der Dispersion auf ca. 20°C und eine Filtration der Dispersion, um die erzeugten Lignin-Partikel abzutrennen.

Ergebnisse und Schlussfolgerungen:

Es gelang bei diesem Versuch, wie in Figur 4 zu sehen ist, relativ große sphärolithische und gut filtrierbare Lignin-Partikel zu erzeugen. Dabei bildeten sich vernachlässigbar wenige Lignin-Verkrustungen oberhalb des Flüssigkeitsspiegels im Reaktor.

Die semikontinuierliche Verdampfungsfällung und die Einstellung der Partikelgröße erfolgten in diesem Experiment nacheinander. Die beiden Schritte könnten auch gleichzeitig oder die Einstellung der Partikelgröße vor der Verdampfung stattfinden. Das Experiment könnte durch Abführen der Dispersion kontinuierlich durchgeführt werden.

**Ausführungsbeispiel 2 (Pilotmaßstab):**

Geräte und Chemikalien:

Die verwendete Organosolv-Kochlauge (aus Laubholz Buche) setzt sich durchschnittlich wie folgt zusammen: 50% w/w Ethanol, 44% w/w Wasser, 3% w/w Kohlenhydrate, 3% w/w Lignin.

Der schematische Versuchsaufbau ist der Figur 3 zu entnehmen.

Es erfolgte eine Vorlage von ca. 150 kg Lignin-Dispersion (mit ca. 10% w/w Ethanol) durch Mischen von Wasser (80% w/w) und Kochlauge (20% w/w) im Rührkessel 1. Der Druck im Rührkessel wurde dabei auf 175 ± 25 mbar eingestellt. Die Heizung 3 der Lignin-Dispersion erfolgte mit konstanter Heizdampfmenge. Es erfolgte eine Zudosierung von ca. 50 kg/h Kochlauge bei Siedebeginn der Dispersion, so dass die Dispersionstemperatur bei einer Temperatur von ca. 51 ± 3°C konstant blieb. Hierdurch wurde gewährleistet, dass die Ethanolkonzentration in der Lignin-Dispersion ebenso konstant blieb. Die Zudosierung von Kochlaugen aus dem Vorratsgefäß 2 wurde nach ca. 100 kg gestoppt, da der maximale Füllstand im Rührkessel 1 erreicht wurde. Anschließend erfolgte eine langsame Verringerung des Druckes auf 100 mbar und ein Abdampfen von Ethanol/Wasser zu erreichen, bis die Dampftemperatur von Wasser (45°C) annähernd erreicht und somit die Ethanolkonzentration in der Lignin-Dispersion kleiner 1% w/w erreicht wurde. Abschließend erfolgte eine Filtration der Dispersion.

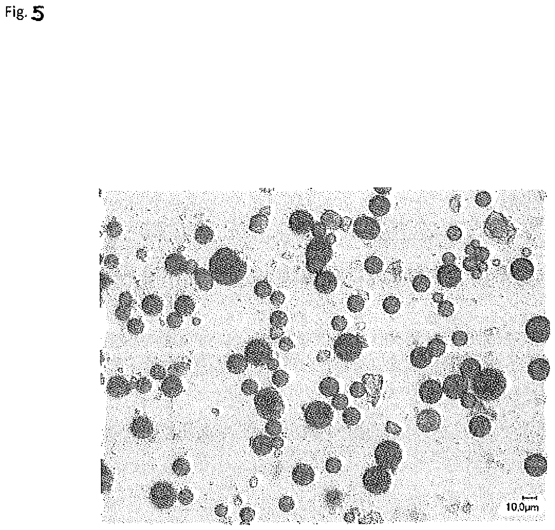

Bei diesem Versuch in Pilotmaßstab gelang es, relativ große und gut filtrierbare Ligninpartikel in Form von Agglomeraten zu produzieren, wie in Figur 5 zu erkennen ist. Oberhalb des Flüssigkeitsspiegels im Reaktor bildeten sich vernachlässigbare Verkrustungen. Die semikontinuierliche Fällung und die Einstellung der Partikelgröße erfolgten in diesem Experiment gleichzeitig. Die Bedingungen waren nah am Optimum zur Bildung von sphärolithischen Partikeln.

Ausführungsbeispiel 3 (kontinuierliche Fällung im Labormaßstab)

Geräte und Chemikalien:
Die verwendete Organosolv-Kochlauge (aus Nadelholz Fichte) setzte sich durchschnittlich wie folgt zusammen: 55% w/w Ethanol, 37% w/w Wasser, 4,5% w/w Lignin, 2% w/w (Oligo-)Saccharide, 1,5% w/w Carboxylsäuren.

Der Versuchsaufbau ist der Figur 4 zu entnehmen.

Durchführung:
Vorversuch zur Bestimmung der Prozessparameter:
Im gerührten 1 Liter Doppelmantelreaktor 1 wurden 821 g Wasser und 159 g Kochlauge zur Anfahr-Dispersion vermischt. Der Ethanolgehalt der Dispersion wurde mit einer kalibrierten ATR-FT-MIR (Attenuated Total Reflection-FT-MIR) Sonde 21 überwacht und auf etwa 7,5% w/w eingestellt. Die Anfahr-Dispersion wurde mit dem Heizthermostat 10a mit 0,5 K/Minute erwärmt. Dabei wurde die Partikelgrößenverteilung des Lignins mit einer FBRM-Sonde 12 (Focused Beam Reflectance Measurement, Lasentec/Mettler Toledo) überwacht. Mit Hilfe einer Videomikroskop-Sonde 20 wurden Form und Größe der Ligninpartikel in der Dispersion beobachtet. Ab einer charakteristischen Temperatur änderten sich Größe und Form der Ligninpartikel deutlich. Diese Temperatur (gemessen mit PT100,7) wurde als Erweichungstemperatur des Lignins angenommen und betrug ca. 53,5 °C. Von der Erweichungstemperatur wurden 5-10 K abgezogen, um die Temperatur für den kontinuierlichen Fällprozess abzuleiten. Aus dem Siedediagramm für Ethanol und Wasser wurde der Prozessdruck von 125 mbar absolut für die kontinuierliche Fällung erhalten.

Kontinuierliche Fällung:
Der Prozessdruck wurde durch die Vakuumpumpe 18 und das Vakuumregelventil 17 eingestellt. Das Heizmedium im Heizmantel 2 wurde über das Heizthermostat 10a, das mittels Temperaturfühler 10b überwacht wird, auf eine Temperatur von ca. 10 K über der Prozesstemperatur eingestellt und die Dispersion auf ca. 45°C Siedetemperatur erwärmt. Die Destillationskolonne 4 wurde bei geschlossenem Destillatventil 13 equilibriert bis die Dampftemperatur 9 konstant ca. 33,5°C betrug. Der Dampf wurde im Kühler 5 mit Kühlmedium des Kühlthermostaten 14a kondensiert. Mit der Feedpumpe 11 wurde dann kontinuierlich etwa 3 g/Minute Kochlauge aus dem Kochlaugenbehälter 3 in den Rührreaktor 1 gefördert. Die Fördermenge wurde von einer Waage 25 erfasst. Das Destillatventil 13 wurde gleichzeitig geöffnet, um das Ethanol der dosierten Kochlauge abzudestillieren und den Ethanolgehalt in der Dispersion konstant zu halten. Das Destillat wurde im Destillatbehälter 6 aufgefangen und mit einer Waage 15 gewogen. Das Destillatventil wurde so eingestellt, dass das Destillat 80-90% w/w Ethanol enthielt. Der Ethanolgehalt wurde über die Dampftemperatur 9 und mit einer Dichtemessung 16 überwacht. Die entstehende Lignindispersion wurde mit der Dispersionspumpe 22 aus dem Rührreaktor 1 in den Dispersionsbehälter 23 gefördert. Die Menge der Dispersion wird mittels einer Waage 24 bestimmt und überwacht. Die Förderleistung wurde so eingestellt, dass die Summe aus den Massen des Destillats und der Dispersion gleich der Masse der dosierten Kochlauge war. Nachdem über 900 g Kochlauge dosiert wurden und der Kochlaugenbehälter leer war, wurde der Prozess beendet. Der Heizthermostat wurde ausgeschaltet, die Anlage belüftet und die Dispersion vollständig aus dem Rührreaktor 1 in den Dispersionsbehälter 23 gepumpt.

Die Dispersion wurde anschließend bei Raumtemperatur filtriert, wobei ein mittlerer Filterkuchenwiderstand von $2,9*10^{12}$ m$^{-2}$ ermittelt wurde.

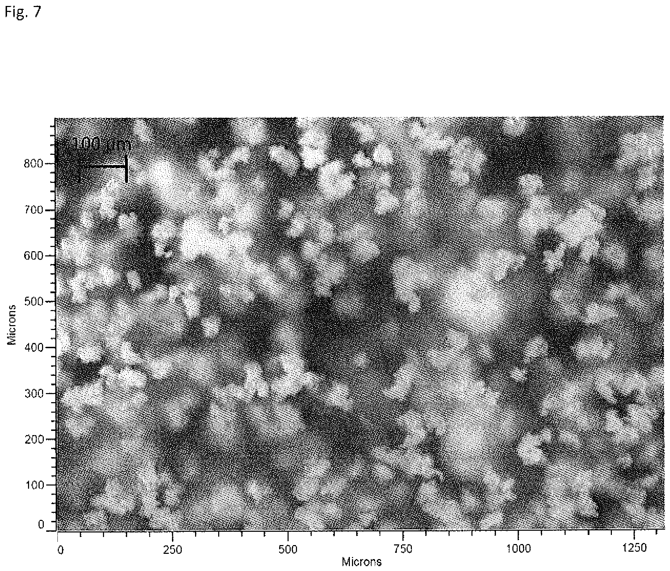

Ergebnisse und Schlussfolgerungen:
Es gelang bei diesem Versuch, kontinuierlich Lignin zu fällen und gleichzeitig relativ große und gut filtrierbare Ligninpartikel in Form von Agglomeraten (Fig. 7) zu produzieren. Die Filterkuchenwiderstand von $2,9*10^{12}$ m$^{-2}$ ist als gut zu bewerten, wenn bei $10*10^{10}$ m$^{-2}$ eine exzellente und bei $10*10^{16}$ m$^{-2}$ eine sehr schlechte Filtrierbarkeit vorliegt. Ein Vorversuch zur Bestimmung der optimalen Prozessparameter konnte erfolgreich angewendet werden. Oberhalb des Flüssigkeitsspiegels am Reaktor bildeten sich nur wenige Ligninverkrustungen aufgrund der höheren Ethanolkonzentration in der Dampfphase (im Vergleich zur Flüssigphase).

**Patentansprüche**

1. Verfahren zur Fällung von Lignin aus einer Organosolv-Kochlauge, enthaltend eine Mischung aus Wasser und mindestens einem organischen Lösungsmittel sowie in der Mischung gelöstem Lignin, bei dem die Organosolv-Kochlauge in eine wässrige Dispersion von Ligninpartikeln oder in ein Filtrat einer wässrigen Dispersion von Ligninpartikeln

eingeleitet wird, wobei aus der durch das Einleiten der Organosolv-Kochlauge in die wässrige Dispersion entstehenden Mischung das mindestens eine organische Lösungsmittel zumindest partiell entfernt wird, so dass der Gehalt des mindestens einen organischen Lösungsmittels in der Mischung geringer gehalten wird als in der Organosolv Kochlauge,
wobei aus dem gelösten Lignin eine separate Lignin-enthaltende Phase ausgebildet wird, die in der Mischung dispergiert vorliegt.

2. Verfahren nach Anspruch 1, **dadurch gekennzeichnet, dass** der Gehalt des mindestens einen organischen Lösungsmittels in der Mischung auf einen vorbestimmten Schwellenwert eingestellt wird, und das Einleiten der Organosolv-Kochlauge und/oder das zumindest partielle Entfernen des mindestens einen organischen Lösungsmittels so gesteuert wird, dass der Schwellenwert maximal um 10 %, bevorzugt maximal 5 %, besonders bevorzugt maximal 2 % über- oder unterschritten wird.

3. Verfahren nach vorhergehendem Anspruch, **dadurch gekennzeichnet, dass** der Schwellenwert des Gehaltes des mindestens einen organischen Lösungsmittels auf 0,01 bis 40 Gew.-%, bevorzugt 1 bis 15 Gew.- %, besonders bevorzugt 5 bis 10 Gew.-% eingestellt wird.

4. Verfahren nach einem der vorhergehenden Ansprüche, **dadurch gekennzeichnet, dass** das zumindest partielle Entfernen des mindestens einen organischen Lösungsmittels mittels Destillation, bevorzugt mittels Destillation unter gegenüber Normalbedingungen reduziertem Druck, insbesondere bei Drücken zwischen 0,1 und 1000 mbar, besonders bevorzugt zwischen 100 und 500 mbar, und/oder durch Membranfiltration erfolgt.

5. Verfahren nach einem der vorhergehenden Ansprüche, **dadurch gekennzeichnet, dass** die dispergierte Lignin-enthaltende Phase feste Ligninpartikel und/oder flüssige Lignintröpfchen enthält oder hieraus besteht.

6. Verfahren nach einem der vorhergehenden Ansprüche, **dadurch gekennzeichnet, dass** das Einleiten der Organosolv-Kochlauge in die wässrige Dispersion oder das Filtrat der wässrigen Dispersion und/oder das zumindest partielle Entfernen des mindestens einen organischen Lösungsmittels fedbatchweise oder kontinuierlich erfolgt.

7. Verfahren nach einem der vorhergehenden Ansprüche, **dadurch gekennzeichnet, dass** die Organosolv-Kochlauge beim Einleiten in die wässrige Dispersion oder in das Filtrat der wässrigen Dispersion bzw. in die Mischung auf eine Temperatur von 20 bis 200 °C, bevorzugt 50 bis 150 °C, besonders bevorzugt von 60 bis 100 °C eingestellt wird.

8. Verfahren nach einem der vorhergehenden Ansprüche, **dadurch gekennzeichnet, dass** die wässrige Dispersion oder das Filtrat der wässrigen Dispersion bzw. die Mischung beim Einleiten der Organosolv-Kochlauge auf eine Temperatur von 20 bis 100 °C, bevorzugt 40 bis 90 °C eingestellt wird.

9. Verfahren nach einem der vorhergehenden Ansprüche, **dadurch gekennzeichnet, dass** der Gehalt des mindestens einen organischen Lösungsmittels in der Organosolv-Kochlauge von 10 bis 90 Gew.-%, bevorzugt 30 bis 70 Gew.-%, besonders bevorzugt 40 bis 60 Gew.-% beträgt.

10. Verfahren nach einem der vorhergehenden Ansprüche, **dadurch gekennzeichnet, dass** der Gehalt des mindestens einen organischen Lösungsmittels in der durch das Einleiten der Organosolv-Kochlauge in die wässrige Dispersion oder in das Filtrat der wässrigen Dispersion entstehenden Mischung nach Abschluss der Fällung weiter reduziert wird, vorzugsweise durch Destillation des mindestens einen organischen Lösungsmittels und/oder mittels Membranfiltration.

11. Verfahren nach einem der vorhergehenden Ansprüche, **dadurch gekennzeichnet, dass** nach Abschluss der Fällung und/oder während der Fällung der Median der zahlengemittelten Partikelgrößenverteilung der dispergierten Lignin enthaltenden Phase durch mechanische Agitation und/oder Erwärmen der Mischung über den Erweichungspunkt des Lignins vergrößert wird.

12. Verfahren nach einem der vorhergehenden Ansprüche, **dadurch gekennzeichnet, dass** die dispergierte Lignin enthaltende Phase nach Abschluss der Fällung und/oder nach Veränderung der Partikelgrößenverteilung und/oder nach weiterer Reduktion des Gehalts an mindestens einem Lösungsmittel und/oder nach Abkühlen der Mischung unter die Erweichungstemperatur der dispergierten Ligninphase abgetrennt werden, bevorzugt mittels Fest-Flüssig-Trennverfahren, insbesondere durch Filtration, Sieben, und/oder Zentrifugation.

13. Verfahren nach einem der vorhergehenden Ansprüche, **dadurch gekennzeichnet, dass** das mindestens eine organischen Lösungsmittel ausgewählt ist aus der Gruppe bestehend aus Alkoholen, insbesondere Ethanol, Methanol, n-Propanol, i-Propanol, n-Butanol, i-Butanol, tert.-Butanol; organischen Säuren, insbesondere Ameisensäure, Essigsäure; Ketonen, insbesondere Aceton sowie Mischungen oder Kombinationen hiervon.

14. Verfahren nach einem der vorhergehenden Ansprüche, **dadurch gekennzeichnet, dass** das Verfahren in einem Behälter mit Agitationsmöglichkeit durchgeführt wird, der eine Zuleitung für Organosolv-Kochlauge, eine Möglichkeit zur Zufuhr der Verdampfungsenergie, einen Abzug für Dämpfe des mindestens einen organischen Lösungsmittels sowie mindestens einen dem Abzug nachgeschalteten Kondensator für das mindestens eine organische Lösungsmittel sowie ggf. einen Ablauf und bevorzugt einen Wärmetauscher im Ablauf und/oder eine Kolonne vor dem Dampfkondensator umfasst.

**Claims**

1. Method for precipitation of lignin from an organosolv pulping liquor, comprising a mixture of water and at least one organic solvent and lignin which is dissolved in the mixture, in which

the organosolv pulping liquor is introduced into an aqueous dispersion of lignin particles or into a filtrate of an aqueous dispersion of lignin particles, the at least one organic solvent being removed at least partially from the mixture produced by introduction of the organosolv pulping liquor into the aqueous dispersion so that the content of the at least one organic solvent in the mixture is kept lower than in the organosolv pulping liquor,
wherein from the dissolved lignin a separate lignin-comprising phase is formed which is present in the mixture in a dispersed state.

2. Method according to claim 1, **characterised in that** the content of the at least one organic solvent in the mixture is adjusted to a predetermined threshold value and the introduction of the organosolv pulping liquor and/or the at least partial removal of the at least one organic solvent is controlled such that the threshold value is exceeded or fallen short of at most by 10%, preferably at most 5%, particularly preferably at most 2%.

3. Method according to the preceding claim, **characterised in that** the threshold value of the content of the at least one organic solvent is adjusted to 0.01 to 40% by weight, preferably 1 to 15% by weight, particularly preferably 5 to 10% by weight.

4. Method according to one of the preceding claims, **characterised in that** at least partial removal of the at least one organic solvent is effected by means of distillation, preferably by means of distillation under a pressure which is reduced compared to normal conditions, in particular at pressures between 0.1 and 1000 mbar, particularly preferably between 100 and 500 mbar, and/or by membrane filtration.

5. Method according to one of the preceding claims, **characterised in that** the dispersed lignin-comprising phase comprises solid lignin particles and/or liquid lignin droplets or consists thereof.

6. Method according to one of the preceding claims, **characterised in that** the introduction of the organosolv pulping liquor into the aqueous dispersion or into the filtrate of the aqueous dispersion and/or the at least partial removal of the at least one organic solvent is realized in fedbatch mode or continuously.

7. Method according to one of the preceding claims, **characterised in that**, during the introduction into the aqueous dispersion or into the filtrate of the aqueous dispersion or into the mixture, the organosolv pulping liquor is adjusted to a temperature of 20 to 200°C, preferably 50 to 150°C, particularly preferably of 60 to 100°C.

8. Method according to one of the preceding claims, **characterised in that** the aqueous dispersion or the filtrate of the aqueous dispersion or the mixture is adjusted to a temperature of 20 to 100°C, preferably 40 to 90°C during the introduction of the organosolv pulping liquor.

9. Method according to one of the preceding claims, **characterised in that** the content of the at least one organic solvent in the organosolv pulping liquor is from 10 to 90% by weight, preferably 30 to 70%, particularly preferably 40 to 60% by weight.

10. Method according to one of the preceding claims, **characterised in that** the content of the at least one organic solvent in the mixture produced by the introduction of the organosolv pulping liquor into the aqueous dispersion or into the filtrate of the aqueous dispersion is further reduced after completion of the precipitation, preferably by distillation of the at least one organic solvent and/or by means of membrane filtration.

11. Method according to one of the preceding claims, **characterised in that**, after completion of the precipitation and/or during precipitation, the median of the number-averaged particle size distribution of the dispersed lignin-comprising phase is increased by mechanical agitation and/or heating of the mixture above the softening point of the lignin.

12. Method according to one of the preceding claims, **characterised in that** the dispersed lignin-comprising phase is separated after completion of the precipitation and/or after changing the particle size distribution and/or after further reduction in the content of at least one solvent and/or after cooling the mixture below the softening temperature of the dispersed lignin phase, preferably by means of solid-liquid separation methods, in particular by filtration, sieving and/or centrifugation.

13. Method according to one of the preceding claims, **characterised in that** the at least one organic solvent is selected from the group consisting of alcohols, in particular ethanol, methanol, n-propanol, i-propanol, n-butanol, i-butanol, tert.-butanol; organic acids, in particular formic acid, acetic acid; ketones, in particular acetone and mixtures or combinations hereof.

14. Method according to one of the preceding claims, **characterised in that** the method is carried out in a container with an agitation option which comprises a feed line for organosolv pulping liquor, an option for supplying the evaporation energy, a draw-off means for vapours of the at least one organic solvent and at least one condenser, installed downstream of the draw-off means, for the at least one organic solvent and possibly an outlet and preferably a heat exchanger in the outlet and/or a column in front of the steam condenser.

**Revendications**

1. Procédé de précipitation de lignine à partir d'une liqueur de cuisson organosolv, contenant un mélange d'eau et d'au moins un solvant organique ainsi que de la lignine dissoute dans le mélange, selon lequel

   la liqueur de cuisson organosolv est introduite dans une dispersion aqueuse de particules de lignine ou dans un filtrat d'une dispersion aqueuse de particules de lignine, dans lequel l'au moins un solvant organique est au moins partiellement éliminé du mélange résultant de l'introduction de la liqueur de cuisson organosolv dans la dispersion aqueuse, de sorte que la teneur de l'au moins un solvant organique dans le mélange est maintenue plus petite que dans la liqueur de cuisson organosolv,
   dans lequel une phase séparée contenant de la lignine, qui est présente en dispersion dans le mélange, est réalisée à partir de la lignine dissoute.

2. Procédé selon la revendication 1, **caractérisé en ce que** la teneur du au moins un solvant organique dans le mélange est ajustée à une valeur seuil prédéterminée, et l'introduction de la liqueur de cuisson organosolv et/ou l'élimination au moins partielle du au moins un solvant organique est commandée de telle sorte que la valeur seuil est dépassée ou n'est pas atteinte au maximum de 10 %, de préférence au maximum de 5 %, de manière particulièrement préférée au maximum de 2%.

3. Procédé selon la revendication précédente, **caractérisé en ce que** la valeur seuil de la teneur du au moins un solvant organique est ajustée à 0,01 à 40 % en poids, de préférence 1 à 15 % en poids, de manière particulièrement préférée 5 à 10 % en poids.

4. Procédé selon l'une quelconque des revendications précédentes, **caractérisé en ce que** l'élimination au moins partielle du au moins un solvant organique s'effectue par distillation, de préférence par distillation sous pression réduite par rapport aux conditions normales, en particulier à des pressions comprises entre 0,1 et 1 000 mbar, de manière particulièrement préférée entre 100 et 500 mbar, et/ou par filtration membranaire.

5. Procédé selon l'une quelconque des revendications précédentes, **caractérisé en ce que** la phase dispersée contenant de la lignine contient des particules solides de lignine et/ou gouttelettes liquides de lignine ou en est constituée.

6. Procédé selon l'une quelconque des revendications précédentes, **caractérisé en ce que** l'introduction de la liqueur de cuisson organosolv dans la dispersion aqueuse ou le filtrat de la dispersion aqueuse et/ou l'élimination au moins partielle du au moins un solvant organique s'effectue par fedbatch ou en continu.

7. Procédé selon l'une quelconque des revendications précédentes, **caractérisé en ce que** la liqueur de cuisson organosolv est ajustée à une température de 20 à 200 °C, de préférence 50 à 150 °C, de manière particulièrement préférée 60 à 100 °C, lors de l'introduction dans la dispersion aqueuse ou dans le filtrat de la dispersion aqueuse ou dans le mélange.

8. Procédé selon l'une quelconque des revendications précédentes, **caractérisé en ce que** la dispersion aqueuse ou le filtrat de la dispersion aqueuse ou le mélange est ajusté à une température de 20 à 100 °C, de préférence 40 à 90 °C, lors de l'introduction de la liqueur de cuisson organosolv.

9. Procédé selon l'une quelconque des revendications précédentes, **caractérisé en ce que** la teneur du au moins un solvant organique dans la liqueur de cuisson organosolv est de 10 à 90 % en poids, de préférence 30 à 70 % en poids, de manière particulièrement préférée 40 à 60 % en poids.

10. Procédé selon l'une quelconque des revendications précédentes, **caractérisé en ce que** la teneur du au moins un solvant organique dans le mélange résultant de l'introduction de la liqueur de cuisson organosolv dans la dispersion aqueuse ou dans le filtrat de la dispersion aqueuse est encore réduite après la fin de la précipitation, de préférence par distillation du au moins un solvant organique et/ou par filtration membranaire.

11. Procédé selon l'une quelconque des revendications précédentes, **caractérisé en ce qu'**après la fin de la précipitation et/ou pendant la précipitation, la médiane de la distribution granulométrique moyenne en nombre de la phase dispersée contenant de la lignine est augmentée par agitation mécanique et/ou chauffage du mélange au-dessus du point de ramollissement de la lignine.

12. Procédé selon l'une quelconque des revendications précédentes, **caractérisé en ce que** la phase contenant la lignine dispersée est séparée après la fin de la précipitation et/ou après modification de la distribution granulométrique et/ou après réduction supplémentaire de la teneur en au moins un solvant et/ou après refroidissement du mélange en dessous de la température de ramollissement de la phase de lignine dispersée, de préférence au moyen de procédés de séparation solide-liquide, en particulier par filtration, tamisage, et/ou centrifugation.

13. Procédé selon l'une quelconque des revendications précédentes, **caractérisé en ce que** le au moins un solvant organique est choisi dans le groupe constitué par les alcools, en particulier l'éthanol, le méthanol, le n-propanol, l'i-propanol, le n-butanol, l'i-butanol, le tert-butanol ; les acides organiques, en particulier l'acide formique, l'acide acétique ; les cétones, en particulier l'acétone, ainsi que les mélanges ou combinaisons de ceux-ci.

14. Procédé selon l'une quelconque des revendications précédentes, **caractérisé en ce que** le procédé est mis en œuvre dans un récipient avec possibilité d'agitation, qui comprend une conduite d'alimentation pour la liqueur de cuisson organosolv, une possibilité d'amenée de l'énergie d'évaporation, une évacuation pour les vapeurs du au moins un solvant organique ainsi qu'au moins un condenseur pour le au moins un solvant organique placé en aval de l'évacuation ainsi que le cas échéant une sortie et de préférence un échangeur de chaleur dans la sortie et/ou une colonne avant le condenseur de vapeur.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3585104 A
- US 4100016 A
- US 8528463 B2
- EP 2336194 A1
- EP 0140226 A2
- CA 2597135 A1
- DE 102013002574 A1

**In der Beschreibung aufgeführte Nicht-Patentliteratur**

- **O. MONNIER et al.** *Part. Part. Syst. Charact.,* 1996, vol. 13, 10-17